# EUROPÄISCHE PATENTSCHRIFT

(11) **EP 0 957 553 B1**
(45) Veröffentlichungstag und Bekanntmachung des Hinweises auf die Patenterteilung: **05.01.2005**
(21) Anmeldenummer: 99108892.3
(22) Anmeldetag: 05.05.1999
(51) Int. Cl.: H02G 3/12

(54) **Kabelkanal**
Cable raceway
Goulotte de câbles

(30) Priorität: 11.05.1998 DE 29808496 U
(43) Veröffentlichungstag der Anmeldung: 17.11.1999
(73) Patentinhaber: GIRA GIERSIEPEN GmbH. & CO. KG, D-42477 Radevormwald (DE); Kunststoffwerke GGK GmbH & Co. KG, 35753 Greifenstein (DE)
(72) Erfinder: Broig, Karl-Heinz, 58515 Lüdenscheid (DE); Müller, Hans-Jörg, 58256 Ennepetal-Königsfeld (DE); Fischer, stefan, 42929 Wermelskirchen (DE); Schmidt, Christian, 35753 Greifensein-Allendorf (DE); Müller, Eckhard, 35781 Weilburg (DE); Fennel, Bernd, 32584 Löhne (DE)
(74) Vertreter: Patentanwälte Dr. Solf & Zapf

(56) Entgegenhaltungen:
- EP-A- 0 289 410
- EP-A- 0 455 563
- EP-A- 0 702 443
- DE-A- 4 110 690
- DE-U- 8 406 177
- FR-A- 1 477 081

## Beschreibung

Die vorliegende Erfindung betrifft einen Kabelkanal gemäß dem Oberbegriff des Patentanspruchs 1, bestehend aus einem im Querschnitt im wesentlichen U-förmigen Profilabschnitt mit einer Bodenwandung und zwei Längsseitenwandungen.

Derartige Kabelkanäle sind hinlänglich bekannt, sie dienen z. B. dazu, auf schnelle und einfache Weise Kabel in Aufputz-Installation (AP) zu verlegen. Darüber hinaus ist es z. B. bei einer Verwendung als sogenannter Brüstungskanal auch bekannt, bestimmte Elektro-Installationsgeräte, wie vor allem Steckosen und/oder Schalter, in den Kabelkanal einzusetzen, wobei ein Verschlußdeckel (Geräteblende) entsprechende Öffnungen im Bereich der Installationsgeräte erhält, um die Zugänglichkeit auch bei grundsätzlich geschlossenem Kanal zu gewährleisten.

Für die beschriebene Montage von Installationsgeräten in solchen Kabelkanälen sind bislang spezielle Einbaudosen verwendet worden, wie sie in vielen Veröffentlichungen beschrieben sind. Beispielsweise seien hier die Dokumente DE-A-38 29 327, DE-C-39 05 226, DE-C-43 31 580 und EP-A-0 473 481 genannt. Dabei muß jeweils eine separate Einbaudose an speziellen Bodenhalteprofilen oder Bodenanformungen des Kabelkanals befestigt werden. Erst dann kann das Installationsgerät in die Dose eingesetzt, darin befestigt und schließlich verkabelt werden. Diese Montageweise ist recht umständlich und zeitaufwendig.

Es sind außerdem Installationsgeräte bekannt (vgl. EP-A-0 702 441 und EP-A-0 240 916), die ein eigenes spezielles Gehäuse aufweisen, welches aber über entsprechende Haltemittel ebenfalls am Bodenprofil innerhalb des Kanals befestigt werden muß. Auch das Dokument EP-A-0 455 563 offenbart eine solche Halterung eines Installationsgerätes über Bodenprofile (sogenannte Hutschiene). Mit den Seitenwandungen werden ausschließlich Abdeckelemente verbunden.

Im Gegensatz dazu beschreibt das dem Oberbegriff des Anspruchs 1 entsprechende Dokument DE-U-84 06 177 einen Leitungsführungs- oder Kabelkanal, bei dem in Übereinstimmung mit der vorliegende Erfindung Installationsgeräte im oberen Randbereich der Längsseitenwandungen befestigbar sind. Hierzu ist aber jeweils eine spezielle Trägerbrücke vorgesehen, die auf den Längsseitenwandungen des Kanalprofils (Unterteil) befestigt wird. Dazu weisen die Seitenwandungen nach innen gerichtete Stege bzw. Flansche mit in Profillängsrichtung voneinander beabstandet angeordneten Langlöchern auf. In diese Langlöcher werden Befestigungshaken der Trägerbrücke eingesetzt. Deshalb sind bei diesem bekannten Kabelkanal die Installationsgeräte nur an bestimmten Stellen befestigbar. Zudem ist nachteiligerweise ein spezieites, adapterartiges Halteteil, und zwar die Trägerbrücke, erforderlich.

Ausgehend von diesem Stand der Technik liegt der Erfindung die Aufgabe zugrunde, einen Kabelkanal der genannten Art zu schaffen, bei dem eine Montage von Installationsgeräten einfacher und schneller und somit insgesamt wirtschaftlicher sowie auch in beliebiger Anordnung durchführbar ist.

Erfindungsgemäß wird dies durch die Merkmale des unabhängigen Anspruchs 1 erreicht. Vorteilhafte Ausgestaltungen der Erfindung sind in den abhängigen Ansprüchen enthalten.

Demnach sind die Halterungsmittel zur unmittelbaren Halterung eines mit dem Geräteeinsatz zu dessen Befestigung verbundenen Tragringes des jeweiligen Installationsgerätes derart ausgebildet, dass der Tragring mit dem Geräteeinsatz an beliebigen Stellen der Längserstreckung des Profilabschnittes befestigbar ist. Diese erfindungsgemäße Ausgestaltung hat den Vorteil, dass keine speziellen und aufwendigen, adapterartigen Halteteile erforderlich sind, weil das jeweilige Installationsgerät über seinen ohnehin vorhandenen, den Geräteeinsatz tragenden Tragring (bei dem es sich zumeist um ein etwa ringförmiges Blechteil handelt) unmittelbar an den Längsseitenwandungen des Profilabschnittes befestigt werden kann, und zwar vorteilhafterweise an jeder beliebigen Stelle der Längserstreckung des Profilabschnittes. Es handelt sich somit praktisch um eine "Tragring-Schnellbefestigung", wodurch über den Tragring das jeweilige Installationsgerät schnell und einfach in dem Kabelkanal montiert werden kann.

Der Raum zwischen der Bodenwandung und den beiden Längsseitenwandungen kann erfindungsgemäß somit an beliebigen Stellen der Kanal-Längserstreckung zur Unterbringung von Installationsgeräten genutzt werden, wobei die quer zur Längserstreckung gemessene Breite etwa der entsprechenden Abmessung des Tragrings entspricht. Aus diesem Grund ist es vorteilhaft, wenn zumindest auf einer Längsseite des Profilabschnittes zwischen der jeweiligen Längsseitenwandung und einer dazu etwa parallel beabstandeten Außenwandung ein Aufnahmekanal für Kabel und dergleichen gebildet ist. In diesem Fall kann die jeweilige Längsseitenwandung in bestimmten Abständen Kabel-Durchführöffnungen aufweisen, um das jeweilige durch den Aufnahmekanal verlaufende Kabel zu dem zugehörigen Installationsgerät führen zu können. Bei einer Ausführungsform mit zwei auf beiden Längsseiten verlaufenden Aufnahmekanälen kann vorteilhafterweise eine Trennung von Leitungen je nach deren Verwendungszweck erfolgen. Beispielsweise können elektrische Energieversorgungskabel in einem der beiden Aufnahmekanäle geführt werden, während z.B. Leitungen der Kommunikationstechnik im anderen Aufnahmekanal untergebracht werden können. Hierbei können die Aufnahmekanäle bezüglich ihrer lichten Innenquerschnitte unterschiedlich groß ausgelegt werden; für zahlreichere und/oder dickere Leitungen kann dann bevorzugt der größere Aufnahmekanal genutzt werden.

Weiterhin kann bevorzugt mindestens ein Trennwandelement vorgesehen sein, welches lösbar und wahlweise an verschiedenen Stellen der Längserstreckung in den Profilabschnitt zur Begrenzung eines Geräte-Aufnahmeraumes bzw. zur Unterteilung des Innenraums des Profilabschnittes einsetzbar ist. Diese vorteilhafte Maßnahme dient auch zur elektrischen Isolation zwischen benachbarten Geräten sowie als Schutz vor versehentlichen Berührungen von spannungsführenden Teilen (nach VDE). Zudem kann über die Trennwandelemente auch eine zusätzliche mechanische Befestigung der Geräteeinsätze bzw. der Tragringe erfolgen. Weiterhin kann in bevorzugter Ausgestaltung der Erfindung jeweils ein Trennwandelement mit Haltemitteln für einen speziellen Kommunikationsgeräteeinsatz integriert ausgebildet sein. Um bei Bedarf auch durch den Profilabschnitt hindurch, und zwar in einem zwischen der Bodenwandung und dem oder den Installationsgeräten verbleibenden Raum, Kabel führen zu können, werden die Trennwandelemente vorzugsweise auch mit entsprechenden - ggf. mit Zugentlastungsmitteln ausgestatteten - Durchführöffnungen ausgebildet.

Zum Verschließen des gesamten Kabelkanals ist - wie an sich üblich - ein länglicher Verschlußdeckel vorgesehen, der natürlich vor Montage an den Stellen der im Kanal angeordneten Geräte entsprechende Öffnungen erhält (Geräteblenden).

Weitere vorteilhafte Ausgestaltungsmerkmale der Erfindung sind in den Unteransprüchen sowie der folgenden Beschreibung enthalten.

Anhand von mehreren in der Zeichnung dargestellten, vorteilhaften Ausführungsbeispielen soll die Erfindung nun genauer erläutert werden. Dabei zeigen:
- Fig. 1: eine Perspektivansicht einer ersten Ausführungsform eines erfindungsgemäßen Kabelkanals,
- Fig. 2: eine Stirnansicht in Pfeilrichtung II gemäß Fig. 1,
- Fig. 3: eine Perspektivansicht einer zweiten Ausführungsform des erfindungsgemäßen Kabelkanals,
- Fig. 4: eine weitere Ansicht des Kanals gemäß Fig. 3 in einer etwas anderen Perspektive,
- Fig. 5: eine Ansicht analog zu Fig. 4 mit vorteilhaften Ausgestaltungsmerkmalen,
- Fig. 6: eine Perspektivansicht einer weiteren Ausführungsform des erfindungsgemäßen Kabelkanals,
- Fig. 7: noch eine weitere Ausführungsform des Kabelkanals wiederum in Perspektivansicht,
- Fig. 8: eine Stirnansicht etwa in der Ausführung nach Fig. 4, jedoch mit einem zusätzlichen Verschlußdeckel,
- Fig. 9: eine Ansicht wie in Fig. 8, jedoch in einer vorteilhaften Ausgestaltung,
- Fig. 10: eine erste Ausführungsvariante der Ausführung nach Fig. 4,
- Fig. 11: eine zweite Ausführungsvariante der Ausführung nach Fig. 4,
- Fig. 12: eine einfachste "Minimalversion" des erfindungsgemäßen Kabelkanals,
- Fig. 13: die Ausführungsform nach Fig. 12 mit zusätzlicher Darstellung von gehalterten Tragringen, und
- Fig. 14: die Ausführung nach Fig. 5 in einer Anwendung zur Aufnahme und Halterung eines Kommunikationsgeräteeinsatzes.

In den verschiedenen Figuren der Zeichnung sind gleiche Teile stets mit den gleichen Bezugszeichen versehen und werden daher in der Regel auch jeweils nur einmal beschrieben.

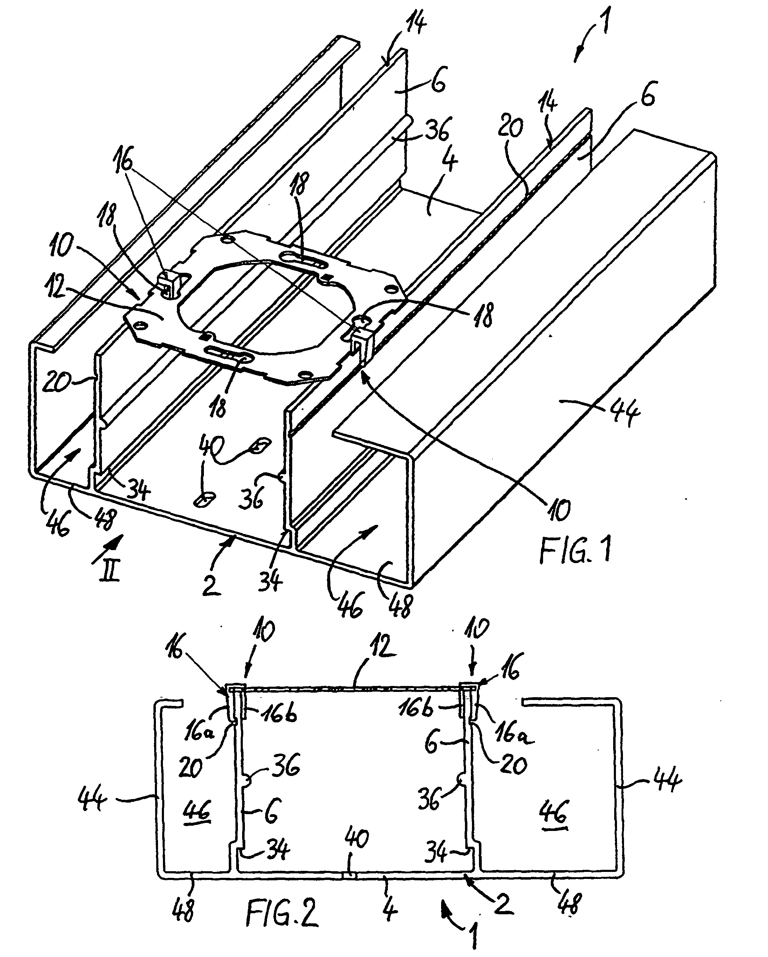

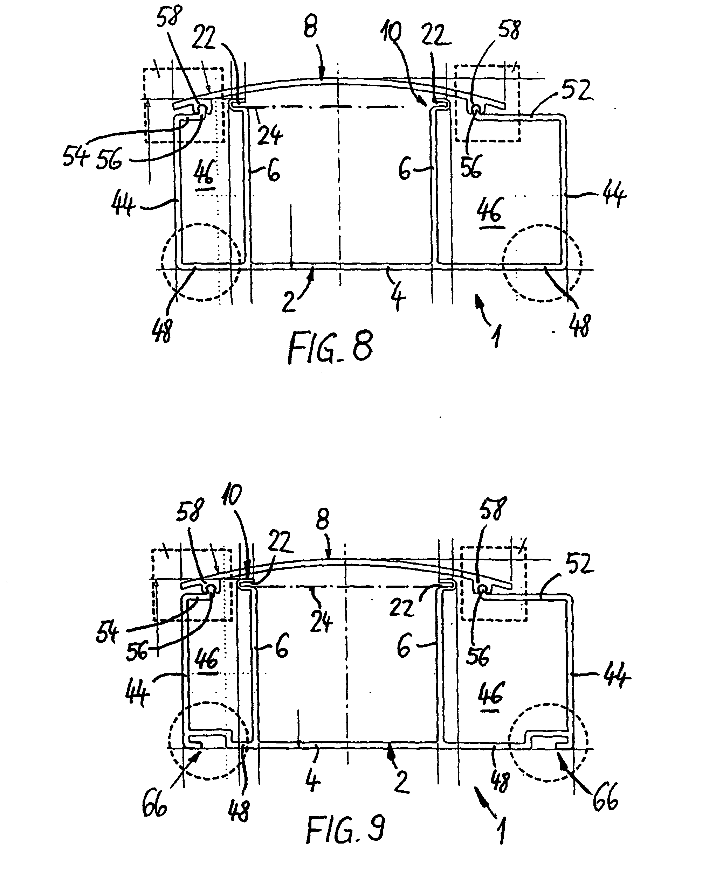

Wie sich beispielsweise aus Fig. 1 und 2 ergibt, besteht ein erfindungsgemäßer Kabelkanal 1 aus einem im Querschnitt im wesentlichen U-förmigen Profilabschnitt 2 mit einer Bodenwandung 4 und zwei Längsseitenwandungen 6. In den dargestellten Ausführungsbeispielen sind die Längsseitenwandungen 6 im wesentlichen zueinander parallel sowie zur Bodenwandung 4 jeweils etwa senkrecht angeordnet. Alternativ dazu ist jedoch auch eine Ausführung als sogenannter Pultkanal möglich, wobei mindestens eine der Längsseitenwandungen 6 wenigstens bereichsweise in einem spitzen Winkel schräg zur Bodenwandung 4 verläuft. Zu dem Kabelkanal 1 gehört außerdem grundsätzlich ein Verschlußdeckel 8, der jedoch nur in den Fig. 8 und 9 dargestellt ist. Der Verschlußdeckel 8 ist mit dem Profilabschnitt 2 auf dessen der Bodenwandung 4 gegenüberliegenden, offenen Seite lösbar verbindbar, um den von dem Profilabschnitt 2 gebildeten Raum zu verschließen.

Erfindungsgemäß ist nun vorgesehen, daß der Profilabschnitt 2 im Bereich der Längsseitenwandungen 6 Halterungsmittel 10 zur unmittelbaren Befestigung mindestens eines Geräteeinsatzes eines Elektro-Installationsgerätes aufweist. Von diesem Geräteeinsatz ist in den Zeichnungsfiguren jeweils lediglich ein sogenannter Tragring 12 dargestellt, wobei es sich in an sich bekannter Weise um ein im wesentlichen ringförmiges und in der Regel aus Metallblech bestehendes Halteteil handelt, an dem der selbst nicht dargestellte Geräteeinsatz befestigt ist. Bei dem Geräteeinsatz selbst kann es sich beispielsweise um eine Steckdose, einen Schalter oder dergleichen handeln.

Vorzugsweise sind die erfindungsgemäßen Halterungsmittel 10 zur unmittelbaren Halterung des jeweiligen Tragringes 12 im von der Bodenwandung 4 abgekehrten, oberen Randbereich der Längsseitenwandungen 6 vorgesehen. Hierfür gibt es mehrere Möglichkeiten, die im folgenden genauer erläutert werden sollen.

Bei der Ausführungsform nach Fig. 1 und 2 ist der jeweilige Tragring 12 in einer auf den Längskanten 14 der Längsseitenwandungen 6 aufliegenden Position über Klammerelemente 16 kraft- und/oder formschlüssig mit den Längsseitenwandungen 6 verbindbar. Die Klammerelemente 16 sind jeweils U-förmig mit zwei etwa parallelen Halteschenkeln 16 a und 16b ausgebildet (s. insbesondere Fig. 2), und sie übergreifen jeweils bereichsweise den Tragring und den darunterliegenden Randbereich der Längsseitenwandung 6, wobei jeweils einer der beiden Halteschenkel (wie dargestellt 16b) durch eine insbesondere schlüssellochartige Öffnung 18 des Tragrings 12 geführt wird. Zwischen den beiden Halteschenkeln 16a, b liegt dann der jeweilige Randabschnitt der Längsseitenwandung 6. Dabei ist wenigstens einer der beiden Halteschenkel - wie dargestellt 16a - mit der Längsseitenwandung 6 insbesondere formschlüssig verrastet. Dazu weist der Halteschenkel 16a eine Haltenase auf, die in eine längs verlaufende Haltenut 20 der Längsseitenwandung 6 eingreift.

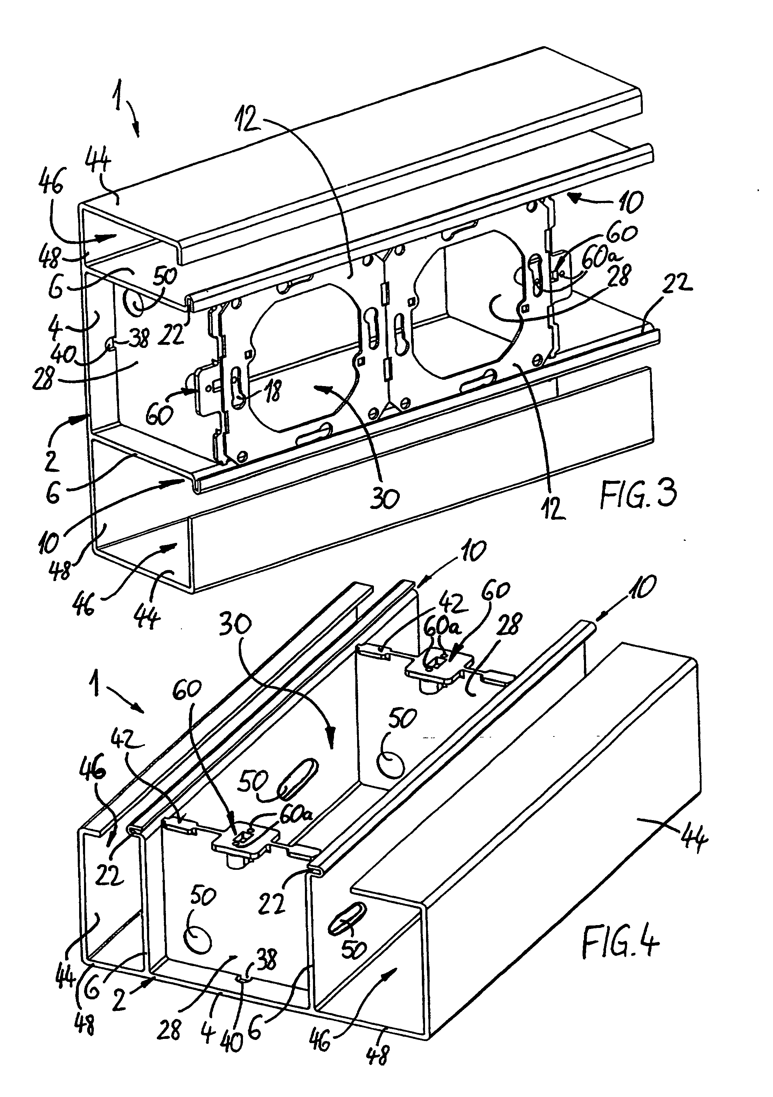

In der unter anderem in Fig. 3 und 4 dargestellten Ausführungsform weisen die Längsseitenwandungen 6 als Halterungsmittel 10 einander zugekehrte, längsverlaufende Haltenuten 22 zur halternden Aufnahme von gegenüberliegenden Randbereichen des Tragringes 12 auf. Wie dargestellt, sind die Haltenuten 22 bevorzugt durch einen im Querschnitt etwa hakenförmigen Verlauf des Endbereichs der jeweiligen Längsseitenwandung 6 gebildet, wodurch sich ein schienenartiges Halteprofil ergibt. Der jeweilige Tragring 12 kann hierdurch in Profillängsrichtung in die Haltenuten 22 eingeschoben werden. Außerdem ist es durch eine elastische Beweglichkeit der Längsseitenwandungen 6 gegebenenfalls auch möglich, den Tragring zunächst mit einem Randbereich in eine der beiden Haltenuten 22 einzusetzen und dann durch Verkippen den gegenüberliegenden Randbereich in die andere Haltenut 22 einzurasten. Wie sich aus Fig. 8 und 9 ergibt, bilden hierbei die Haltenuten 22 mit ihren jeweils unteren, d.h. der Bodenwandung 4 nächstliegenden Flächen eine Auflageebene 24 für den Tragring 12. Bei dieser Ausführung kann zusätzlich eine Sicherung des jeweiligen Tragringes 12 in den Haltenuten 22 vorgesehen sein, beispielsweise mittels Klammerelementen ähnlich der Ausführung nach Fig. 1 und 2 (Klammerelemente 16).

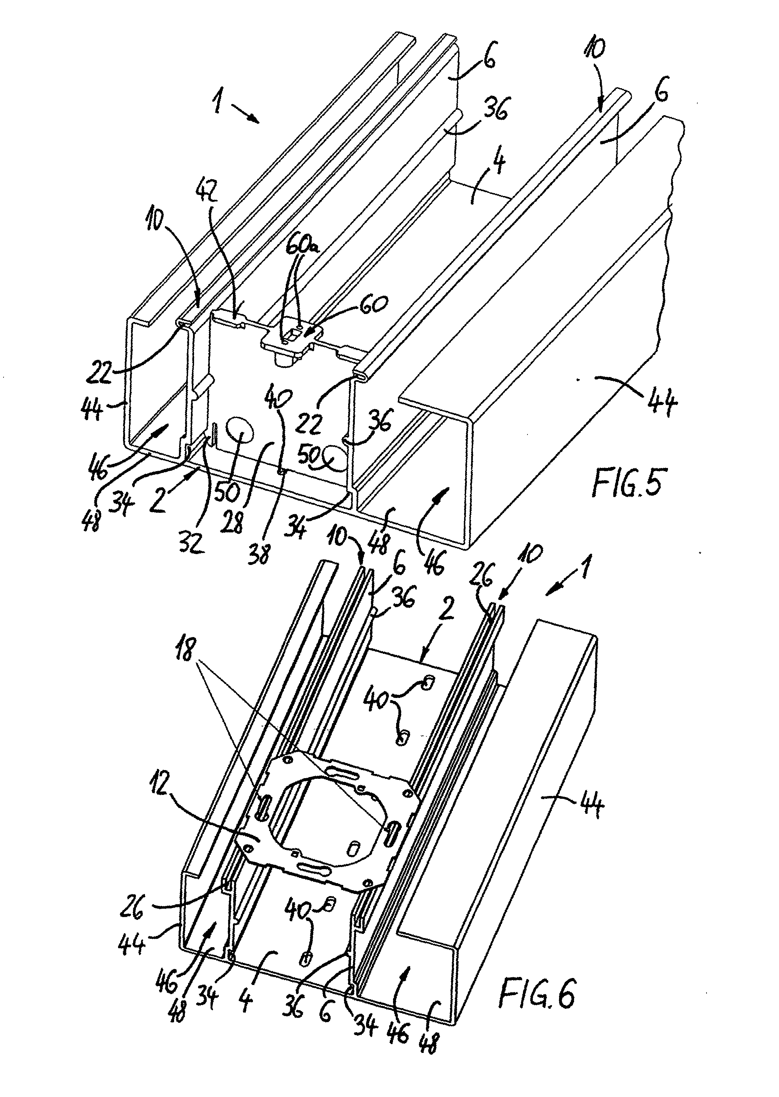

Bei der in Fig. 6 veranschaulichten Ausführungsform ist der Tragring 12 mittels nicht dargestellter Schrauben an den Längsseitenwandungen 6 befestigbar. Hierzu ist vorzugsweise im oberen Randbereich jeder Längsseitenwandung 6 eine längsverlaufende, in die von der Bodenwandung 4 wegweisende Richtung (nach oben) offene Montagenut 26 derart gebildet, daß jeweils eine insbesondere selbstschneidende Schraube durch eine der Öffnungen 18 des auf den Längsseitenwandungen 6 aufliegenden Tragringes 12 hindurch in die jeweilige Montagenut 26 einschraubbar ist. Hierdurch kann vorteilhafterweise der Tragring 12 an einer beliebigen Stelle der Längserstreckung mit den Längsseitenwandungen 6 verschraubt werden, weil die entsprechenden Schrauben an jeder Stelle der jeweiligen Montagenut 26 einschraubbar sind.

Wie sich beispielsweise aus Fig. 3 und 4 ergibt, ist bevorzugt mindestens ein Trennwandelement 28 vorgesehen, welches zur Unterteilung des langgestreckten Innenraums des Profilabschnittes 2 bzw. zur Begrenzung eines Geräte-Aufnahmeraumes 30 sowie auch zum Schutz gegen Berühren wahlweise an verschiedenen Stellen der Längserstreckung lösbar in den Profilabschnitt 2 einsetzbar ist. Wie dargestellt, kann mit jeweils zwei Trennwandelementen 28 ein Aufnahmeraum 30 in beiden Richtungen abgegrenzt werden. Somit kann auf einfache Weise praktisch eine "Gerätedose" innerhalb des Profilabschnittes 2 gebildet werden. Das bzw. jedes Trennwandelement 28 ist hierbei bevorzugt kraft- und/oder formschlüssig mit den Längsseitenwandungen 6 und/oder mit der Bodenwandung 4 verbindbar, insbesondere verrastbar.

Gemäß Fig. 5 kann hierzu mit Vorteil vorgesehen sein, daß das jeweilige Trennwandelement 28 zwei seitliche, elastische Rastnasen 32 aufweist, die seitliche Rastkanten 34 der Längsseitenwandungen 6 formschlüssig hintergreifen. Zusätzlich kann gegebenenfalls an den Längsseitenwandungen 6 jeweils eine längsverlaufende Führungsrippe 36 gebildet sein, wobei das Trennwandelement 28 mit entsprechenden Ausnehmungen auf den Führungsrippen 36 sitzt. Zusätzlich kann ein Positionieransatz 38 des Trennwandelementes 28 in eine von mehreren Positionsöffnungen 40 der Bodenwandung 4 eingreifen.

Vorzugsweise bildet jedes Trennwandelement 28 mit seinem oberen Randbereich eine Auflagefläche 42 für den jeweiligen Tragring 12, wobei diese Auflagefläche 42 mit der Auflageebene 24 (Fig. 8 und 9) zusammenfällt. Der Tragring 12 kann gegebenenfalls auch zusätzlich an mindestens einem der Trennwandelemente 28 befestigt, beispielsweise verschraubt werden.

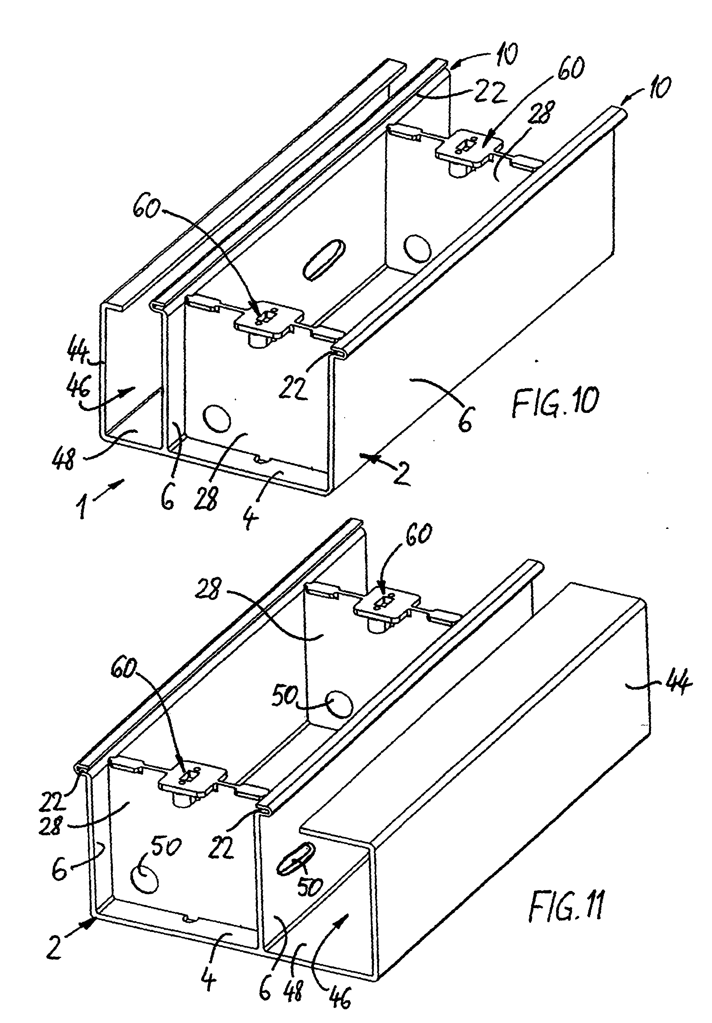

Im Hinblick darauf, daß der Innenraum des Profilabschnittes 2 zumindest bezüglich seiner quer zur Längserstreckung und parallel zur Bodenwandung 4 gemessenen Breite zur Aufnahme von Installationsgeräten genutzt wird, ist es vorteilhaft, wenn zumindest auf einer Längsseite des Profilabschnittes 2 zwischen der jeweiligen Längsseitenwandung 6 und einer dazu etwa parallel beabstandeten Außenwandung 44 ein Aufnahmekanal 46 für Kabel und dergleichen Leitungen gebildet ist. Bei allen Ausführungen nach den Fig. 1 bis 9 sind vorteilhafterweise zwei entsprechende Aufnahmekanäle 46 vorgesehen, und zwar auf beiden Seiten jeweils im Anschluß an jede Längsseitenwandung 6. Hierbei sind diese beiden Aufnahmekanäle 46 vorzugsweise bezüglich ihres lichten Innenquerschnittes unterschiedlich groß, insbesondere unterschiedlich breit, ausgebildet. Bei den Ausführungen nach Fig. 10 und 11 ist jeweils nur auf einer der beiden Seiten ein Aufnahmekanal 46 gebildet. Im Falle der Fig. 10 handelt es sich um einen schmaleren und bei Fig. 11 um einen breiteren Aufnahmekanal 46. Hierbei ist jede den jeweiligen Aufnahmekanal 46 begrenzende Außenwandung 44 zweckmäßigerweise über einen Bodensteg 48 einstückig mit dem profilabschnitt 2 verbunden, wobei der Bodensteg 48 im wesentlichen in der gleichen Ebene wie die Bodenwandung 4 liegt.

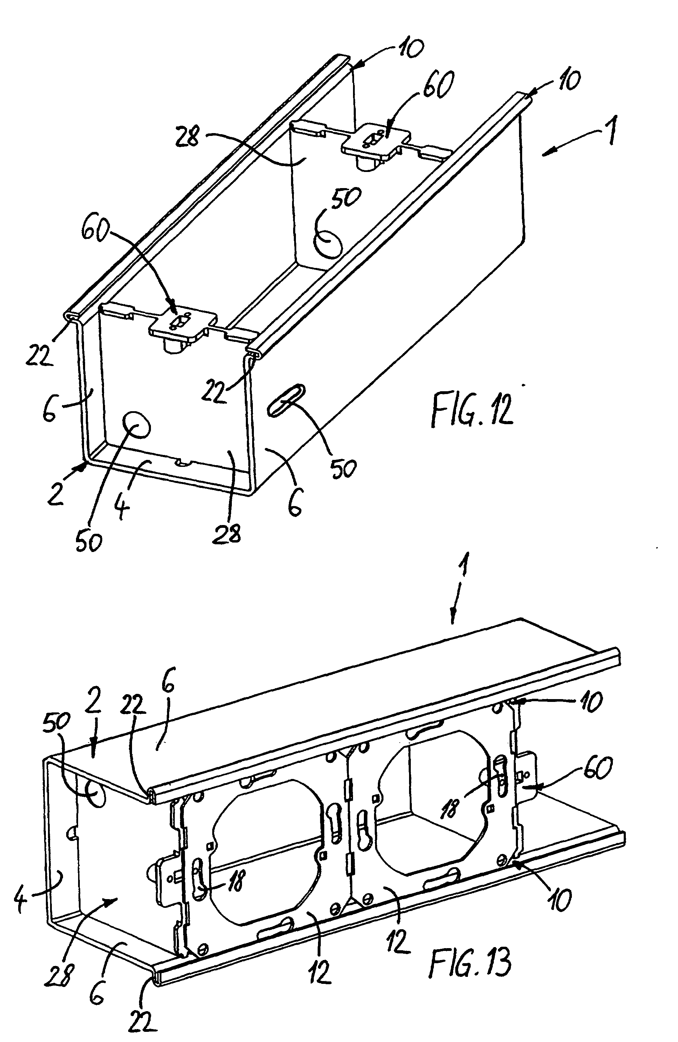

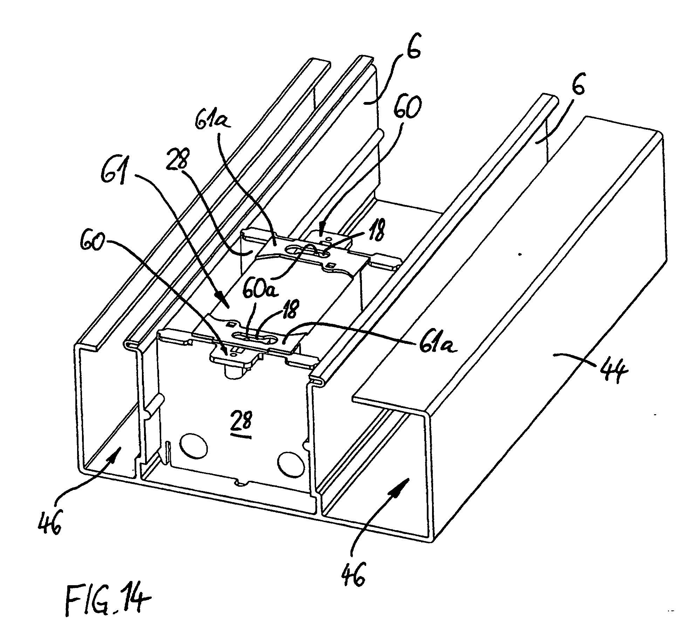

Bei der in Fig. 12 und 13 veranschaulichten Ausführungsform handelt es sich um eine "Minimalversion" ohne Aufnahmekanäle 46. Vor allem bei dieser Ausführung, bevorzugt aber auch bei allen anderen Ausführungsformen, besitzen die Trennwandelemente 28 vorteilhafterweise Durchführöffnungen 50 für Kabel und sonstige Leitungen, die durch den Profilabschnitt 2 zwischen den eingesetzten Installationsgeräten und der Bodenwandung 4 verlaufen.

Bei den Ausführungsformen, bei denen mindestens ein seitlicher Aufnahmekanal 46 vorgesehen ist, weist die jeweils benachbarte Längsseitenwandung 6 zweckmäßigerweise ebenfalls entsprechende Durchführöffnungen 50 auf, um die in dem jeweiligen Aufnahmekanal 46 verlaufenden Kabel jeweils zu einem der innerhalb des Profilabschnittes 2 untergebrachten Installationsgeräte führen zu können.

Was nun den oben bereits erwähnten Verschlußdeckel 8 betrifft, so ist dieser auf praktisch beliebige Weise mit dem Profilabschnitt 2 verbindbar, insbesondere verrastbar. So kann der Verschlußdeckel mit mindestens einer der beiden Längswandungen 6 und/oder mit mindestens einer der Außenwandungen 44 verbunden bzw. verrastet werden. Wie in Fig. 8 und 9 dargestellt ist, ist bei der bevorzugten Ausführungsform mit beidseitigen Aufnahmekanälen 46 vorgesehen, daß der Verschlußdeckel 8 mit beiden Außenwandungen 44 verbunden wird. Dabei kann der Verschlußdeckel 8 im wesentlichen eben ausgebildet sein, oder er kann - wie dargestellt - aus gestalterischen Gründen eine konvexe Wölbung in seinem den Bereich des eigentlichen, inneren Profilabschnittes 2 überspannenden Bereich aufweisen. Dadurch ergibt sich eine sehr ansprechende Optik von der Sichtseite her. Trotz der Asymmetrie der beiden Aufnahmekanäle 46 kann der Verschlußdeckel 8 bezüglich des inneren Profilabschnittes 2 vorteilhafterweise symmetrisch ausgebildet sein. Hierzu ist im Bereich des breiteren Aufnahmekanals 46 vorgesehen, daß sich an die Außenwandung 44 ein dem Bodensteg 48 gegenüberliegender und hierzu etwa paralleler Wandungssteg 52 anschließt. Zweckmäßigerweise ist im Bereich des anderen, schmaleren Aufnahmekanals 46 ebenfalls ein kürzerer Wandungssteg 54 vorgesehen, und diese Wandungsstege 52, 54 weisen endseitige Raststege 56 auf, auf die der Verschlußdeckel 8 mit entsprechenden Rastaufnahmen 58 aufsetzbar ist. Die Zuordnung der Raststege 56 und Rastaufnahmen 58 kann jedoch durchaus auch umgekehrt vorgesehen sein.

Gemäß einer weiteren, insbesondere in Fig. 14 veranschaulichten, vorteilhaften Ausgestaltung der Erfindung können spezielle Haltemittel 60 z.B. für mindestens einen Kommunikationsgeräteeinsatz 61 vorgesehen sein, bei dem es sich um ein derart relativ schmaleres Gerät handelt, daß es nicht direkt an den Längsseitenwandungen 6 befestigt werden kann. Stattdessen erfolgt bevorzugt eine mittelbare Halterung über die Trennwandelemente 28. Bei dem Gerät 61 kann es sich beispielsweise um eine Telefon-Steckdose oder dergleichen handeln. Vorzugsweise sind diese Haltemittel 60 jeweils mit einem der Trennwandelemente 28 integriert (einstückig) ausgebildet. Hierzu wird beispielsweise auf Fig. 4 und 5 verwiesen. Wie dargestellt (vgl. auch Fig. 4 und 5) sind die Haltemittel 60 als Auflageelemente mit Schraublöchern 60a für Tragteile 61a der Kommunikationsgeräte 61 ausgebildet. Dabei liegen die Schraublöcher 60a etwa mittig zwischen den Längsseitenwandungen 6. Alternativ zu der bevorzugten einstückigen Ausbildung können die Haltemittel 60 auch als separate Teile an den Trennwandelementen 28 befestigt, z.B. aufgeklammert, werden.

Wie sich aus Fig. 3 sowie auch aus Fig. 13 ergibt, können hierdurch die Trennwandelemente 28 vorteilhafterweise auch zur zusätzlichen Befestigung der Tragringe 12 verwendet werden, beispielsweise indem nicht dargestellte Schrauben durch Öffnungen 18 des Tragringes 12 hindurch in die Schaublöcher 60a der Trennwandelemente 28 eingeschraubt werden. Die Trennwandelemente 28 dienen dabei vorteilhafterweise auch zur abstützenden Auflage der Tragringe 12.

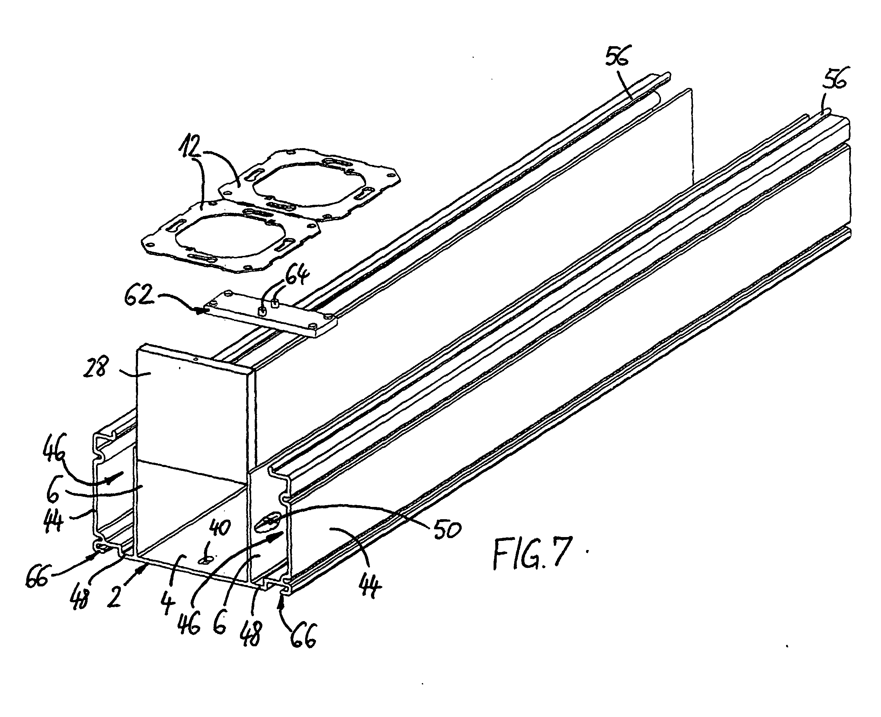

Wie sich noch aus Fig. 7 ergibt, kann mit Vorteil mindestens ein Verbinderstück 62 vorgesehen sein, mit dem jeweils zwei benachbarte Tragringe 12 fixierend miteinander verbunden werden können. Wie dargestellt, kann das Verbinderstück 62 streifenförmig ausgebildet sein und Positionsansätze 64 aufweisen, die in Öffnungen der Tragringe 12 eingreifen. Gegebenenfalls kann eine zusätzliche oder alternative Verschraubung der Tragringe 12 mit dem Verbinderstück 62 vorgesehen sein. Diese Maßnahme dient zur sicheren Fixierung der beiden Tragringe 12 relativ zueinander, um insbesondere das übliche Abstands-"Stichmaß" von in der Regel 71 mm vorzusehen.

Bei den Ausführungsformen nach Fig. 7 und 9 sind zur Befestigung des gesamten Kabelkanals 1 auf einer Montagefläche spezielle Halteprofilabschnitte 66 gebildet. Diese insbesondere im Bereich der Bodenstege 48 und/oder der Bodenwandung 4 gebildeten Halteprofilabschnitte 66 sind im Querschnitt jeweils hakenförmig ausgebildet, und sie wirken mit nicht dargestellten, inbesondere schienenförmigen Montageelementen zusammen.

Der erfindungsgemäße Kabelkanal 1 läßt sich sehr wirtschaftlich herstellen, da der innere Profilabschnitt 2 zusammen mit den Aufnahmekanälen 46 als Strangprofil aus Kunststoff geformt werden kann. Auch die Montage ist einfach und schnell durchführbar, indem der Profilabschnitt 2 wie üblich auf einer Montagefläche befestigt wird. Die Installationsgeräte lassen sich dann sehr schnell über die Tragringe 12 einsetzen und befestigen (Tragring-Schnellbefestigung). Der Verschlußdeckel 8 erhält vor dem Aufsetzen entsprechende Öffnungen in den Bereichen aller eingesetzten Installationsgeräte.

Vor allem in der "Minimalversion" gemäß Fig. 12 und 13, eventuell aber auch in den Ausführungen nach Fig. 10 und 11, ergibt sich die vorteilhafte Anwendungsmöglichkeit, ein mit bestimmter, relativ kurzer Länge abgelängtes Stück des Kabelkanals als Einbaudose zu verwenden und beispielsweise in ein anderes größeres Kabelkanalprofil einzusetzen. Diese Einbaudose kann zum Abgrenzen des Geräte-Aufnahmeraumes 30 auf beiden Längsstirnseiten durch jeweils eines der Trennwandelemente 28 geschlossen werden.

## Patentansprüche

1. Kabelkanal (1), bestehend aus einem im Querschnitt im wesentlichen U-förmigen Profilabschnitt (2) mit einer Bodenwandung (4) und zwei Längsseitenwandungen (6), wobei der Profilabschnitt (2) im von der Bodenwandung (4) abgekehrten Randbereich der Längsseitenwandungen (6) Halterungsmittel (10) zur Befestigung mindestens eines Geräteeinsatzes eines Elektro-Installationsgerätes aufweist,
**dadurch gekennzeichnet, dass** die Halterungsmittel (10) zur unmittelbaren Halterung eines mit dem Geräteeinsatz zu dessen Befestigung verbundenen Tragringes (12) des jeweiligen Installationsgerätes derart ausgebildet sind, dass der Tragring (12) mit dem Geräteeinsatz an beliebigen Stellen der Längserstreckung des Profilabschnittes (2) befestigbar ist.

2. Kabelkanal nach Anspruch 1,
**dadurch gekennzeichnet, dass** der Tragring (12) in einer auf freien Längskanten (14) der Längsseitenwandungen (6) aufliegenden Position mittels Klammerelementen (16) kraft- und/oder formschlüssig mit den Längsseitenwandungen (6) verbindbar ist.

3. Kabelkanal nach Anspruch 1,
**dadurch gekennzeichnet, daß** die Längsseitenwandungen (6) als Halterungsmittel (10) einander zugekehrte, längsverlaufende Haltenuten (22) zur halternden Aufnahme von gegenüberliegenden Randbereichen des Tragringes (12) aufweisen.

4. Kabelkanal nach Anspruch 1,
**dadurch gekennzeichnet, daß** der Tragring (12) mittels Schrauben an den Längsseitenwandungen (6) befestigbar ist, wozu vorzugsweise im Randbereich jeder Längsseitenwandung (6) eine längsverlaufende, in die von der Bodenwandung (4) wegweisende Richtung offene Montagenut (26) derart gebildet ist, daß jeweils eine insbesondere selbstschneidende Schraube durch eine Öffnung des auf den Längsseitenwandungen (6) aufliegenden Tragringes (12) hindurch in die jeweilige Montagenut (26) einschraubbar ist.

5. Kabelkanal nach einem der Ansprüche 1 bis 4,
**gekennzeichnet durch** mindestens ein lösbar und wahlweise an verschiedenen Stellen der Längserstreckung in den Profilabschnitt (2) einsetzbares Trennwandelement (28) zur Begrenzung eines Geräte-Aufnahmeraumes (30).

6. Kabelkanal nach Anspruch 5,
**dadurch gekennzeichnet, daß** das/jedes Trennwandelement (28) kraft- und/oder formschlüssig mit den Längsseitenwandungen (6) und/oder mit der Bodenwandung (4) verbindbar ist.

7. Kabelkanal nach Anspruch 5 oder 6,
**dadurch gekennzeichnet, daß** das/jedes Trennwandelement (28) mit dem Profilabschnitt (2) verrastbar ist.

8. Kabelkanal nach einem der Ansprüche 1 bis 7,
**dadurch gekennzeichnet, daß** zumindest auf einer Längsseite des Profilabschnittes (2) zwischen der jeweiligen Längsseitenwandung (6) und einer dazu etwa parallel beabstandeten Außenwandung (44) ein Aufnahmekanal (46) für Kabel und dergleichen gebildet ist.

9. Kabelkanal nach Anspruch 8,
**dadurch gekennzeichnet, daß** die/jede Außenwandung (44) über einen Bodensteg (48) einstückig mit dem Profilabschnitt (2) verbunden ist.

10. Kabelkanal nach einem der Ansprüche 1 bis 9,
**gekennzeichnet durch** einen mit dem Profilabschnitt (2) lösbar verbindbaren Verschlußdekkel (8).

11. Kabelkanal nach Anspruch 10,
**dadurch gekennzeichnet, daß** der Verschlußdeckel (8) mit mindestens einer der beiden Längsseitenwandungen (6) und/oder mit mindestens einer der Außenwandungen (44) verbindbar, insbesondere verrastbar ist.

12. Kabelkanal nach einem der Ansprüche 1 bis 11,
**gekennzeichnet durch** zusätzliche Haltemittel (60) insbesondere für mindestens einen Kommunikationsgeräteeinsatz 61, wobei diese Haltemittel (60) vorzugsweise jeweils mit einem Trennwandelement (28) integriert ausgebildet sind.

13. Kabelkanal nach einem der Ansprüch 1 bis 12,
**gekennzeichnet durch** Durchführöffnungen (50) für Kabel und dergleichen im Bereich mindestens einer der Längsseitenwandungen (12) und/oder im Bereich mindestens eines der Trennwandelemente (28).

14. Kabelkanal nach Anspruch 13,
**dadurch gekennzeichnet, daß** im Bereich von mindestens einer Teilmenge der Durchführöffnungen (50) Kabel-Zugentlastungsmittel vorgesehen sind.

15. Kabelkanal nach einem der Ansprüche 1 bis 14,
**gekennzeichnet durch** mindestens ein Verbinderstück (62) zum fixierenden Verbinden von zwei benachbarten Tragringen (12) zweier Installationsgeräte.

16. Kabelkanal nach einem der Ansprüche 1 bis 15,
**gekennzeichnet durch** etwa in der Ebene der Bodenwandung (4) liegende, randliche, im Querschnitt im wesentlichen hakenförmige Halteprofilabschnitte (66) zum Befestigen an insbesondere schienenförmigen Montageelementen.

## Claims

1. Cable duct (1), comprising a profile section (2), which is essentially U-shaped in cross section, having a base wall (4) and two longitudinal side walls (6), the profile section (2) having holding means (10) in the peripheral region, facing away from the base wall (4), of the longitudinal side walls (6) for the purpose of fixing at least one device insert of an electrical service device, **characterized in that** the holding means (10) are designed to directly hold a supporting ring (12), which is connected to the device insert for the purpose of fixing it, of the respective service device such that the supporting ring (25) can be fixed to the device insert at any desired points along the longitudinal extent of the profile section (2).

2. Cable duct according to Claim 1, **characterized in that** the supporting ring (12) in a position lying on free longitudinal edges (14) of the longitudinal side walls (6) can be connected in a force-fitting and/or interlocking manner to the longitudinal side walls (6) by means of clip elements (16).

3. Cable duct according to Claim 1, **characterized in that** the longitudinal side walls (6) have, as the holding means (10), longitudinally extending retaining grooves (22), facing one another, for the purpose of accommodating in a retaining manner opposite peripheral regions of the supporting ring (12).

4. Cable duct according to Claim 1, **characterized in that** the supporting ring (12) can be fixed to the longitudinal side walls (6) by means of screws, for which purpose a longitudinally extending mounting groove (26), which is open in the direction pointing away from the base wall (4), is preferably formed in the peripheral region of each longitudinal side wall (6) such that in each case an in particular self-tapping screw can be screwed through an opening in the supporting ring (12), lying on the longitudinal side walls (6), into the respective mounting groove (26).

5. Cable duct according to one of Claims 1 to 4, **characterized by** at least one partition wall element (28), which can be inserted in the profile section (2) in a releasable manner and optionally at different points along the longitudinal extent, for the purpose of delimiting a device-accommodating space (30).

6. Cable duct according to Claim 5, **characterized in that** the/each partition wall element (28) can be connected in a force-fitting and/or interlocking manner to the longitudinal side walls (6) and/or to the base wall (4).

7. Cable duct according to Claim 5 or 6, **characterized in that** the/each partition wall element (28) can be latched to the profile section (2).

8. Cable duct according to one of Claims 1 to 7, **characterized in that** an accommodating duct (46) for cables and the like is formed at least on one longitudinal side of the profile section (2) between the respective longitudinal side wall (6) and an outer wall (44) which is spaced apart from and approximately parallel to said longitudinal side wall (6).

9. Cable duct according to Claim 8, **characterized in that** the/each outer wall (44) is connected in an integral manner to the profile section (2) via a base web (48).

10. Cable duct according to one of Claims 1 to 9, **characterized by** a closure lid (8) which can be connected in a releasable manner to the profile section (2).

11. Cable duct according to Claim 10, **characterized in that** the closure lid (8) can be connected, in particular latched, to at least one of the two longitudinal side walls (6) and/or to at least one of the outer walls (44).

12. Cable duct according to one of Claims 1 to 11, **characterized by** additional retaining means (60) in particular for at least one communication device insert (61), these retaining means (60) preferably being integrated in each case with a partition wall element (28).

13. Cable duct according to one of Claims 1 to 12, **characterized by** through-openings (50) for cables and the like in the region of at least one of the longitudinal side walls (12) and/or in the region of at least one of the partition wall elements (28).

14. Cable duct according to Claim 13, **characterized in that** cable strain-relief means are provided in the region of at least one subset of through-openings (50).

15. Cable duct according to one of Claims 1 to 14, **characterized by** at least one connector piece (62) for the purpose of fixedly connecting two adjacent supporting rings (12) of two service devices.

16. Cable duct according to one of Claims 1 to 15, **characterized by** peripheral retaining profile sections (66), which lie approximately on the plane of the base wall (4) and are essentially hook-shaped in cross section, for the purpose of fixing it to, in particular, mounting elements in the form of rails.

## Revendications

1. Caniveau de câbles (1) composé d'un tronçon de profilé (2) sensiblement en forme de U en section transversale, comprenant une paroi de fond (4) et deux parois latérales longitudinales (6), le tronçon de profilé (2) présentant, dans la région marginale des parois latérales longitudinales (6) qui est à l'opposé de la paroi de fond (4), des moyens d'attache (10) pour la fixation d'au moins un insert d'appareil appartenant à un appareil d'installation électrique,
**caractérisé en ce que** les moyens d'attache (10) sont conformés pour l'attache directe d'un anneau porteur (12) de l'appareil d'installation concerné qui est relié à l'insert d'appareil pour assurer sa fixation, de telle manière que l'anneau porteur (12), avec l'insert d'appareil, puisse être fixé en n'importe quel endroit de l'extension longitudinale du tronçon de profilé (2).

2. Caniveau de câbles selon la revendication 1,
**caractérisé en ce que** l'anneau porteur (12) peut être assemblé aux parois latérales longitudinales (6) par action de force et/ou par complémentarité de forme dans une position en appui sur les chants longitudinaux libres (14) des parois latérales longitudinales (6) au moyen d'éléments formant crampons (16).

3. Caniveau de câbles selon la revendication 1,
**caractérisé en ce que** les parois latérales longitudinales (6) présentent, comme moyens d'attache (10), des rainures de retenue (22) s'étendant longitudinalement, dirigées l'une vers l'autre, pour recevoir avec effet de retenue des régions marginales opposées de l'anneau porteur (12).

4. Caniveau de câbles selon la revendication 1,
**caractérisé en ce que** l'anneau porteur (12) peut être fixé aux parois latérales longitudinales (6) au moyen de vis, raison pour laquelle une rainure de montage (26) qui s'ouvre dans le sens qui s'éloigne de la paroi de fond (4) est formée, de préférence dans la région marginale de chaque paroi latérale longitudinale (6), de telle manière qu'une vis, en particulier autotaraudeuse, puisse être vissée dans la rainure de montage concernée (26), en traversant une ouverture de l'anneau porteur (12) qui repose sur les parois latérales longitudinales (6).

5. Caniveau de câbles selon une des revendications 1 à 4,
**caractérisé par** au moins un élément formant cloison (28) destiné à limiter un espace de logement d'appareil (30) et qui peut être mis en place dans le tronçon de profilé (2) de façon démontable et sélectivement en différents endroits de l'extension longitudinale.

6. Caniveau de câbles selon la revendication 5,
**caractérisé en ce que** le ou chaque élément formant cloison (28) peut être assemblé aux parois latérales longitudinales (6) et/ou à la paroi de fond (4) par action de force et/ou par complémentarité de forme.

7. Caniveau de câbles selon la revendication 5 ou 6,
**caractérisé en ce que** chaque élément formant cloison (28) peut être encliqueté avec le tronçon de profilé (2).

8. Caniveau de câbles selon une des revendications 1 à 7,
**caractérisé en ce qu'**au moins sur un côté longitudinal du tronçon de profilé (2), un caniveau de logement (46) pour câbles et analogues est formé entre la paroi latérale longitudinale (6) concernée et une paroi extérieure (44) qui en est espacée, à peu près parallèlement.

9. Caniveau de câbles selon la revendication 8,
**caractérisé en ce que** la ou chaque paroi extérieure (44) est reliée en une seule pièce au tronçon de profilé (2) par l'intermédiaire d'une aile de fond (48).

10. Caniveau de câbles selon une des revendications 1 à 9,
**caractérisé par** un couvercle de fermeture (8) qui peut être assemblé au tronçon de profilé (2) de façon démontable.

11. Caniveau de câbles selon la revendication 10,
**caractérisé en ce que** le couvercle de fermeture (8) peut être assemblé, en particulier par encliquetage, à au moins une des deux parois latérales longitudinales (6) et/ou à au moins une des parois extérieures (44).

12. Caniveau de câbles selon une des revendications 1 à 11,
**caractérisé par** des moyens de retenue supplémentaires (60), en particulier pour au moins un insert d'appareil de communication (61), ces moyens de retenue (60) étant de préférence intégrés chacun à un élément formant cloison (28).

13. Caniveau de câbles selon une des revendications 1 à 12,
**caractérisé par** des ouvertures de passage (50) pour câbles ou analogues prévus dans la région d'au moins une des parois latérales longitudinales (12) et/ou dans la région d'au moins un des éléments formant cloison (28).

14. Caniveau de câbles selon la revendication 13,
**caractérisé en ce que** des moyens de dégagement de traction pour câbles sont prévus dans la région d'au moins une partie des ouvertures de passage (50).

15. Caniveau de câbles selon une des revendications 1 à 14,
**caractérisé par** au moins une pièce d'assemblage (62) destinée à l'assemblage bloqué de deux anneaux porteurs (12) adjacents appartenant à deux appareils d'installation.

16. Caniveau de câbles selon une des revendications 1 à 15,
**caractérisé par** des tronçons de profilés de retenue (66) marginaux sensiblement en forme de crochet en section transversale, situés à peu près dans le plan de la paroi de fond (4), destinés à la fixation à des éléments de montage en particulier en forme de rail.
